(19) Europäisches Patentamt

European Patent Office

Office européen des brevets

(11) **EP 0 665 101 B1**

(12) **EUROPÄISCHE PATENTSCHRIFT**

(45) Veröffentlichungstag und Bekanntmachung des Hinweises auf die Patenterteilung:
**01.07.1998 Patentblatt 1998/27**

(51) Int. Cl.$^6$: **B32B 27/32**, B65D 65/40

(21) Anmeldenummer: **95100853.1**

(22) Anmeldetag: **23.01.1995**

(54) **Mehrschichtige biaxial orientierte Polypropylenfolie, Verfahren zu ihrer Herstellung und ihre Verwendung**

Biaxially oriented multilayer polypropylene film, process for its preparation and its use

Feuille multicouche en polypropylène étirée biaxialement, procédé pour son fabrication et son utilisation

(84) Benannte Vertragsstaaten:
**BE DE ES FR GB IT NL**

(30) Priorität: **29.01.1994 DE 4402689**

(43) Veröffentlichungstag der Anmeldung:
**02.08.1995 Patentblatt 1995/31**

(73) Patentinhaber:
**Hoechst Trespaphan GmbH**
**66539 Neunkirchen (DE)**

(72) Erfinder:
• **Peiffer, Herbert, Dr.**
**D-55126 Mainz (DE)**

• **Murschall, Ursula, Dr.**
**D-55283 Nierstein (DE)**

(74) Vertreter:
**Luderschmidt, Schüler & Partner GbR**
**Patentanwälte,**
**Postfach 3929**
**65029 Wiesbaden (DE)**

(56) Entgegenhaltungen:
**EP-A- 0 175 259**    **EP-A- 0 477 797**
**EP-A- 0 515 969**

**Beschreibung**

Die Erfindung betrifft eine biaxial orientierte polyolefinische-Mehrschichtfolie, welche mindestens eine Basisschicht B, eine Zwischenschicht Z und eine Deckschicht D umfaßt und welche migrierende Additive enthält.

Biaxial orientierte Polypropylenfolien für den Verpackungssektor können grob gesehen in zwei Gruppen, die transparenten und die opaken bzw. weißen Folien, aufgeteilt werden. Alle Folien enthalten zur Verbesserung verschiedener Folieneigenschaften migrierende Additive wie beispielsweise Antistatika, innere und äußere Gleitmittel und Trennmittel. Diese Zusatzstoffe werden wahlweise entweder in die Basisschicht oder in die Deckschicht eingearbeitet.

Infolge ihrer Unverträglichkeit mit den Polymeren der Basisschicht diffundieren die Zusatzstoffe wie Carbonsäureamide, Siloxane oder Antistatika an die Folienoberfläche und entfalten dort ihre reibungsvermindernde oder antistatische Wirkung. Da diese Migration eine gewisse Zeit erfordert, verhindert die Einarbeitung der Additive in die Basisschicht die Abdampfung der Stoffe z. B. in Streckaggregate während des Folienherstellungsprozesses. Zur Erzielung der gewünschten Effekte ist es notwendig, eine im Verhältnis zur Deckschicht dicke Basisschicht mit migrierenden Additiven auszurüsten. Aufgrund der Dicke der Basisschicht ist die mengenmäßige Zugabe an Wirkstoffkomponenten wesentlich größer als bei der Rezepturierung der Deckschicht/en. Zur Erzielung eines optimalen Reibungskoeffizienten wird z. B. eine Konzentration von 0,1 bis 0,3 Gew.-%, bezogen auf das Gewicht der Basisschicht, an Erucasäureamid in die Basisschicht eingearbeitet. In Kombination mit siegelbaren und/oder nicht siegelbaren Deckschichten, die mit einem Antiblockmittel ausgerüstet sind, erreicht man Reibungskoeffizienten zwischen 0,15 und 0,25. Weiterhin wird zur Erzielung einer guten Antistatik der Folie zusätzlich die Basisschicht mit Antistatika ausgerüstet (0,1 bis 0,2 Gew.-%).

Die vorstehend genannten Additive sind im Vergleich zum Polymeren wesentlich teurer. Das bedeutet, daß es nicht wirtschaftlich ist, die dicke Basisschicht mit Additiven zu rezepturieren.

Um die Menge an Additiven, bezogen auf die Gesamtfolie, zu reduzieren, werden die Additive direkt in die Deckschicht/en eingearbeitet. Damit ist die Wirtschaftlichkeit besser und die Gesamtmigration der Additive, z. B. in Lebensmittel, kleiner. Die Einarbeitung migrierender Additive direkt in die Deckschicht führt jedoch zu massiven und je nach Prozeßführung zu unterschiedlichen Ausdampfungen während der Folienherstellung. Als Folge hiervon ist ein häufiges Reinigen der Streckaggregate notwendig, da sonst durch Heruntertropfen von Wachs die Folieneigenschaften, insbesondere die Folienoptik, beeinträchtigt werden und die Maschine sich mit Wachs zusetzt. Je nach Prozeßführung dampfen mehr oder weniger Additive aus, so daß sich kein konstantes Reibungsniveau und kein konstantes antistatisches Verhalten der Folien erzielen läßt.

Die US-A-4,419,410 beschreibt eine mehrschichtige boPP-Folie mit migrierenden Additiven in der Basisschicht, deren Basisschicht aus einem Polypropylen mit hoher Stereoregularität und deren Deckschicht aus einem Polypropylen mit niedriger Stereoregularität aufgebaut ist. Die niedrige Stereoregularität der Deckschicht verbessert die Migration der Additive aus der Basis- in die Deckschicht. Die beschriebenen Konzentrationen führen zu hohen Kosten, was unerwünscht ist.

In der US-A-4,419,411 wird eine mehrschichtige boPP-Folie mit guten Gleiteigenschaften beschrieben, die den in der US-A-4,419,410 genannten Schichtaufbau besitzt. Zur Erzielung einer guten Gleitreibung enthält die Basisschicht ein unverträgliches Amid und die Deckschicht/en ein Silikonöl als Gleitmittel und ein Silikat als Antiblockmittel. Das Silikonöl beeinträchtigt die Coronabehandelbarkeit der Folie, da das Silikonöl bei der Coronabehandlung zum Teil vernetzt und dadurch die Siegelfähigkeit und die Gleitreibung der Folie verschlechtert werden.

Die US-A-4,911,976 beansprucht eine mehrschichtige boPP-Folie obengenannten Aufbaus, die zusätzlich in der Basisschicht ein Amin enthält, womit die Reibung weiter verbessert und eine gute antistatische Ausrüstung der Folie geschaffen wird. Die Nachteile sind wie zuvor bei der US-A-4,419,411 beschrieben.

In der EP-A-0 180 087 wird eine fünfschichtige opake boPP-Folie mit verbesserten mechanischen Eigenschaften beansprucht, bei der zur Erzielung der guten mechanischen Eigenschaften die vakuolenfreie Schicht aus Polypropylen und einem Kohlenwasserstoffharz aufgebaut ist. Diese Schichten bilden die dreischichtige Trägerfolie der beanspruchten Folie. Auf der Trägerfolie sind beidseitig glasklare Polyolefinschichten angeordnet. Zur Erzielung eines ausreichenden Reibungsverhaltens werden die Oberflächen der Folie mit einem Antiblockmittel ausgerüstet. Für heutige Anwendungen auf schnellaufenden Einschlagsautomaten ist die Folie nur wenig geeignet, da sie einen vergleichsweise hohen Reibungskoeffizienten aufweist.

Die EP-A-0 222 295 betrifft eine siegelbare, transparente Mehrschichtfolie mit überlegener Kratzfestigkeit. Die Folie besteht aus einer Basisschicht aus Polypropylen und beidseitigen Zwischenschichten ebenfalls aus Polypropylen sowie zwei siegelfähigen Deckschichten. Zur Verbesserung der Kratzfestigkeit enthalten die Zwischenschichten ein anorganisches Pigment und ein Oxyalkylamin. Die beiden siegelfähigen Deckschichten enthalten eine Olefinharzzusammensetzung, ein niedermolekulares verträgliches Harz, ein Propylenhomopolymeres und ein Silikonöl. Die Folie weist den Nachteil auf, daß sie nicht bedruckbar ist.

Die US-A-5,151,317 betrifft eine beidseitig siegelbare, biaxial orientierte Polyolefinfolie aus fünf Schichten, wobei die Basisschicht im wesentlichen aus Propylenpolymeren und die beiden Siegelschichten im wesentlichen aus siegelbaren Olefinpolymeren bestehen. Die Zwischenschichten enthalten zur Verbesserung der Reibung ein Silikonöl, das eine Viskosität von weniger als 500 mm$^2$/s aufweist. Nachteilig an der geringen Viskosität des Silikonöls ist, daß bei der Weiterverarbeitung der Folien das Gleitmittel schnell verflüchtigt und somit die Reibung der Folien von Verarbeitungsschritt zu Verarbeitungsschritt schlechter wird.

EPA-0 515 969 beschreibt eine biaxial orientierte, mehrschichtige Polypropylenfolie aus einer Kernschicht und mindestens einer Zwischenschicht und mindestens einer Deckschicht, wobei die Kernschicht im wesentlichen aus einem Propylenhomopolymeren und Calciumcarbonat mit einem mittleren Partikeldurchmesser von 1 bis 2 μm besteht und gegebenenfalls zusätzlich Titandioxid enthält. Die Zwischenschicht(en) bestehen im wesentlichen aus einem Propylenhomopolymeren und gegebenenfalls Titandioxid und gegebenenfalls einem Kohlenwasserstoffharz. Die Deckschichten bestehen im wesentlichen aus siegelfähigen olefinischen Polymeren und die Dicke dieser Deckschicht(en) ist kleiner oder gleich 0,4 μm.

EP-A-0 477 797 beschreibt eine beidseitig siegelbare transparente, coextrudierte Polyolefinmehrschichtfolie mit einer Basisschicht im wesentlichen aus Propylenpolymeren und Deckschichten im wesentlichen aus siegelbaren Olefinpolymeren, wobei die Basisschicht der Mehrschichtfolie ein Propylenhomopolymerisat enthält, das peroxidisch abgebaut ist und der Abbaufaktor A im Bereich von 3 - 10 liegt. Das siegelbare Olefinpolymere der Deckschichten ist ein Ethylen-Propylen-Copolymerisat mit einem Ethylengehalt im Bereich von 2 bis 8 Gew.-%, bezogen auf das Gesamtgewicht des Copolymerisates, das auch peroxidisch abgebaut ist, wobei dieser Abbaufaktor A im Bereich von 3 bis 15 liegt.

Die Aufgabe der vorliegenden Erfindung bestand darin, die vorstehend beschriebenen Nachteile der im Stand der Technik bekannten Additiv-Rezepturen für Polypropylenfolien zu vermeiden. Insbesondere soll eine biaxial orientierte Polypropylenfolie zur Verfügung gestellt werden, die eine gleichbleibende und, falls gewünscht, niedrige Reibung und eine gleichbleibende, falls gewünscht, gute Antistatik aufweist und die im Falle von Verpackungsfolien problemlos auf schnellaufenden Verpackungs- bzw. Verarbeitungsmaschinen zu verarbeiten ist. Im Falle von Kaschierfolien wird daneben gefordert, daß kein Verkleben und Verblocken der Folie auf den Kaschiertrommeln stattfindet. Dabei soll die Folie einen guten Glanz und im Falle transparenter Ausführungsformen eine niedrige Trübung aufweisen. Die Folie soll, falls erforderlich, für eine Coronabehandlung sehr gut geeignet und gut bedruckbar sein. Weiterhin soll die Folie eine sehr niedrige Gesamtmigration, insbesondere gegenüber Lebensmitteln, aufweisen.

Diese Aufgabe wird erfindungsgemäß gelöst durch eine polyolefinische-Mehrschichtfolie der eingangs genannten Gattung, deren kennzeichnendes Merkmal darin besteht, daß die Folie die migrierenden Additive ausschließlich in ihrer Zwischenschicht und in einer Menge von maximal 0,15 Gew.-%, bezogen auf das Gesamtgewicht der Folie, enthält.

Erfindungsgemäß umfaßt die Folie mindestens drei Schichten und besteht aus einer Basisschicht B und mindestens einer Zwischenschicht Z und mindestens einer Deckschicht D gemäß einem Schichtaufbau BZD.

Die Basisschicht ist im Sinne der vorliegenden Erfindung diejenige Schicht, welche die größte Schichtdicke aufweist und mindestens 40 %, vorzugsweise 50 bis 90 %, der Gesamtfoliendicke ausmacht. Deckschichten sind diejenigen Schichten, welche die außenliegenden Schichten bilden. Zwischenschichten sind naturgemäß zwischen anderen vorhandenen Schichten, im allgemeinen zwischen der Basisschicht und einer Deckschicht, angebracht.

In einer bevorzugten Ausführungsform besteht die Folie aus einer Basisschicht B, beidseitig darauf aufgebrachten Zwischenschichten Z und auf den Zwischenschichten aufgebrachten Deckschichten D, d. h. einem fünfschichtigen symmetrischen Aufbau DZBZD. In einer weiteren bevorzugten Ausführungsform besteht die Folie aus einer Basisschicht B, einer einseitig darauf aufgebrachten Zwischenschicht Z und auf der Basis- und der Zwischenschicht aufgebrachten Deckschichten D gemäß DBZD. Gegebenenfalls können diese Grundaufbauten aus drei, vier oder fünf Schichten weitere Zwischenschichten enthalten.

Die Basisschicht der Folie enthält im allgemeinen mindestens 70 Gew.-%, vorzugsweise 75 bis 98 Gew.-%, insbesondere 80 bis 95 Gew.-%, jeweils bezogen auf die Basisschicht, eines nachstehend beschriebenen Propylenpolymeren.

Dieses Propylenpolymer enthält mindestens 90 Gew.-%, vorzugsweise 94 bis 100 Gew.-%, insbesondere 98 bis 100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen. Die Angaben in Gew.-% beziehen sich jeweils auf das Propylenhomopolymere. Isotaktisches Propylenhomopolymer ist bevorzugt.

Das Propylenhomopolymere der Basisschicht hat im allgemeinen einen Schmelzpunkt von 140 bis 170 °C, vorzugsweise von 150 bis 165 °C, und im allgemeinen einen Schmelzflußindex (Messung DIN 53 735 bei 21,6 N Belastung und 230 °C) von 1,5 bis 20 g/10 min, vorzugsweise von 2 bis 15 g/10 min. Der n-heptanlösliche Anteil des isotaktischen Polymeren beträgt im allgemeinen 1 bis 6 Gew.-%, bezogen auf das Polymere.

In einer bevorzugten Ausführungsform der erfindungsgemäßen Folie wird das Propylenpolymere der Basisschicht peroxidisch abgebaut.

Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

MFI$_1$ =    Schmelzflußindex des Propylenpolymeren vor dem Zusatz des organischen Peroxids

MFI$_2$ =    Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Um den niedrigen erfindungsgemäßen Additivgehalt von maximal 0,15 Gew.-% an migrierenden Additiven zu gewährleisten, werden der Basisschicht vorteilhafterweise im wesentlichen keine migrierenden Additive wie z. B. Gleitmittel, Antistatika und Trennmittel. zugesetzt.

Im allgemeinen enthält die Basisschicht jedoch übliche Stabilisatoren und Neutralisationsmittel in jeweils wirksamen Mengen sowie gegebenenfalls Kohlenwasserstoffharz. In einer weiteren möglichen Ausführungsform enthält die Basisschicht Pigmente und/oder vakuoleniniziierende Teilchen. Alle nachstehenden Angaben in Gew.-% beziehen sich auf das Gewicht der Basisschicht.

Als Stabilisatoren können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Dihydrotalcit, Calciumstearat und/oder Calciumcarbonat einer mittleren Teilchengröße von höchstens 0,7 $\mu$m, einer absoluten Teilchengröße von kleiner 10 $\mu$m und einer spezifischen Oberfläche von mindestens 40 m$^2$/g.

Die harzmodifizierten Ausführungsformen enthalten das Harz in einer Menge von 1 bis 20 Gew.-%, vorzugsweise 1 bis 12 Gew.-%, insbesondere 1 bis 10 Gew.-%, bezogen auf das Gewicht der Basisschicht.

Kohlenwasserstoffharze sind niedermolekulare Polymere, deren Molekulargewicht im allgemeinen in einem Bereich von 300 bis 8 000, vorzugsweise 400 bis 5 000, insbesondere 500 bis 2 000, liegt. Damit ist das Molekulargewicht der Harze deutlich niedriger als das der Propylenpolymeren, welche die Hauptkomponente der einzelnen Folienschichten bilden und im allgemeinen ein Molekulargewicht von über 100 000 haben.

Als Harze sind Kohlenwasserstoffharze bevorzugt, welche gegebenenfalls teilweise und vorzugsweise vollständig hydriert sind. Als Harze kommen grundsätzlich synthetische Harze oder Harze natürlichen Ursprungs in Frage. Es hat sich als besonders vorteilhaft erwiesen, Harze mit einem Erweichungspunkt von $\geqq$ 80 °C (gemessen nach DIN 1995-U4 bzw. ASTM E-28) einzusetzen, wobei solche mit einem Erweichungspunkt von 100 bis 180 °C, insbesondere 120 bis 160 °C, bevorzugt sind.

Unter den zahlreichen Harzen sind Kohlenwasserstoffharze in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben) bevorzugt.

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffen der Formel C$_{10}$H$_{16}$, die in fast allen etherischen Ölen oder ölhaltigen Harzen von Pflanzen enthalten sind, und phenolmodifizierte Terpenharze. Als spezielle Beispiele der Terpene sind Pinen, $\alpha$-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 120 °C eingesetzt (bei den ungesättigten Polymerisaten ist das hydrierte Produkt bevorzugt). Ganz besonders bevorzugt werden die Cyclopentadienpolymerisate mit einem Erweichungspunkt von mindestens 125 °C oder Copolymerisate aus α-Methylstyrol und Vinyltoluol mit einem Erweichungspunkt von 110 bis 160 °C in der Basisschicht eingesetzt.

In einer weißen oder opaken bzw. weiß/opaken Ausführungsform enthält die Basisschicht zusätzlich Pigmente oder vakuoleniniziierende Teilchen bzw. eine Kombination aus diesen. Solche Folien haben eine Lichtdurchlässigkeit nach ASTM-D 1033-77 von höchstens 50 %, vorzugsweise von höchstens 70 %.

Pigmente umfassen solche Teilchen, die im wesentlichen nicht zur Vakuolenbildung beim Verstrecken führen. Die färbende Wirkung der Pigmente wird durch die Teilchen selbst verursacht. Der Begriff "Pigment" ist im allgemeinen an eine Teilchengröße von 0,01 bis maximal 1 μm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 μm, vorzugsweise 0,01 bis 0,7 μm, insbesondere 0,01 bis 0,4 μm. Die Basisschicht enthält Pigmente im allgemeinen in einer Menge von 1 bis 25 Gew.-%, insbesondere 2 bis 20 Gew.-%, bevorzugt 5 bis 15 Gew.-%, jeweils bezogen auf die Basisschicht.

Übliche Pigmente sind Materialien wie z. B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen zu mindestens 95 Gew.-% aus Rutil und werden bevorzugt mit einem Überzug aus anorganischen Oxiden eingesetzt, wie er üblicherweise als Überzug für $TiO_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. $TiO_2$-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den $TiO_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, jeweils bezogen auf 100 g $TiO_2$-Teilchen, enthalten. Als besonders vorteilhaft hat es sich erwiesen, wenn die $TiO_2$-Teilchen mit $Al_2O_3$ oder mit $Al_2O_3$ und Polydimethylsiloxan beschichtet sind.

Opake Ausführungsformen der Folien enthalten vakuoleniniziierende Teilchen, welche mit der Polymermatrix unverträglich sind und beim Verstrecken der Folien zur Bildung von vakuolenartigen Hohlräumen führen, wobei Größe, Art und Anzahl der Vakuolen vom Material und von der Größe der festen Teilchen und den Streckbedingungen wie Streckverhältnis und Strecktemperatur abhängig sind. Die Vakuolen geben den Folien ein charakteristisches perlmuttartiges, opakes Aussehen, welches durch Lichtstreuung an den Grenzflächen Vakuole/Polymermatrix entsteht. Im allgemeinen beträgt der mittlere Teilchendurchmesser der vakuoleniniziierenden Teilchen 1 bis 6 μm, vorzugsweise 1,5 bis 5 μm. Die Basisschicht enthält vakuoleniniziierende Teilchen im allgemeinen in einer Menge von 1 bis 25 Gew.-%.

Übliche vakuoleniniziierende Teilchen der Basisschicht sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Calciumcarbonat, Siliciumdioxid und Titandioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Polyester, Polystyrole, Polyamide, halogenierte organische Polymere, wobei Polyester wie beispielsweise Polybutylen- oder Polyethylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Weiß/opake Folien, welche mit vakuoleniniziierenden Teilchen und mit Pigment ausgerüstet sind, enthalten die vakuoleniniziierenden Teilchen in einer Menge von 1 bis 10 Gew.-%, bevorzugt 1 bis 5 Gew.-%, und Pigment in einer Menge von 1 bis 7 Gew.-%, bevorzugt 1 bis 5 Gew.-%.

Die Dichte der opaken bzw. weißen Folien kann innerhalb weiter Grenzen variieren und hängt von der Art und der Menge der Füllstoffe ab. Die Dichte liegt im allgemeinen im Bereich von 0,4 bis 1,1 $g/cm^3$.

Pigmentierte Folien haben eine Dichte in der Größenordnung von 0,9 $g/cm^3$ oder darüber, vorzugsweise im Bereich von 0,9 bis 1,1 g/cm$^3$.

Folien, welche nur vakuoleniniziierende Teilchen enthalten, haben eine Dichte von kleiner 0,9 g/cm$^3$. Für Verpak-kungsfolien mit einem Gehalt an vakuoleniniziierenden Teilchen von 2 bis 5 Gew.-% liegt die Dichte im Bereich von 0,6 bis 0,85 g/cm$^3$. Für Folien mit einem Gehalt an vakuoleniniziierenden Teilchen von 5 bis 14 Gew.-% liegt die Dichte im Bereich von 0,4 bis 0,8 g/cm$^3$.

Folien, welche Pigmente und vakuoleniniziierende Teilchen enthalten, haben eine Dichte im Bereich von 0,5 bis 0,85 g/cm$^3$, je nach Verhältnis von Pigmentgehalt zu Gehalt an vakuoleniniziierenden Teilchen.

Die erfindungsgemäße Polypropylenfolie umfaßt weiterhin mindestens eine auf der Basisschicht aufgebrachte Zwischenschicht aus Polymeren aus α-Olefinen mit 2 bis 10 Kohlenstoffatomen.

Beispiele für derartige α-olefinische Polymere sind

ein Propylenhomopolymer oder
ein Copolymer von

Ethylen und Propylen oder
Ethylen und Butylen-1 oder
Propylen und Butylen-1 oder

ein Terpolymer von

Ethylen und Propylen und Butylen-1 oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,
wobei insbesondere Propylenhomopolymer oder
statistische Ethylen-Propylen-Copolymere mit

einem Ethylengehalt von 1 bis 10 Gew.-%, bevorzugt 2,5 bis 8 Gew.-%, oder

statistische Propylen-Butylen-1-Copolymere mit

einem Butylengehalt von 2 bis 25 Gew.-%, bevorzugt 4 bis 20 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 2 bis 20 Gew.-%, bevorzugt 4 bis 20 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends, bevorzugt sind.

Das in der Zwischenschicht eingesetzte Propylenhomopolymere enthält zum überwiegenden Teil (mindestens 90 %) Propylen und besitzt im allgemeinen einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere hat im allgemeinen einen Schmelzflußindex von 1,5 g/10 min bis 20 g/10 min, vorzugsweise 2,0 g/10 min bis 15 g/10 min.

Die in der Zwischenschicht eingesetzten vorstehend beschriebenen Co- und Terpolymeren weisen im allgemeinen einen Schmelzflußindex von 1,5 bis 30 g/10 min, vorzugsweise von 3 bis 15 g/10 min, auf. Der Schmelzpunkt liegt vorzugsweise im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Die Schmelzflußindices der Polymeren für die Basis- und Zwischenschicht/en sind vorteilhafterweise möglichst gleich groß. Gegebenenfalls kann der MFI der Zwischenschicht etwas höher liegen, wobei eine Differenz von 20 %, vorzugsweise von 2 bis 10 %, nicht überschritten werden sollte.

Gegebenenfalls können alle vorstehend beschriebenen Zwischenschichtpolymeren in der gleichen Weise wie vorstehend für die Basisschicht beschrieben peroxidisch abgebaut sein, wobei grundsätzlich die gleichen Peroxide verwendet werden. Der Abbaufaktor für die Zwischenschichtpolymeren liegt im allgemeinen in einem Bereich von 3 bis 15, vorzugsweise 6 bis 10.

Die erfindungsgemäße Folie enthält maximal 0,15 Gew.-% an migrierenden Additiven, bezogen auf das Gesamtgewicht der Folie. Diese Additivmenge wird erfindungsgemäß der/den Zwischenschicht/en zugesetzt. Überraschenderweise ist es dadurch möglich, die Absolutmenge an migrierenden Additiven in der Folie stark zu verringern, ohne daß Beeinträchtigungen der Folienqualität auftreten.

Die Zwischenschicht enthält im allgemeinen 0,1 bis 3 Gew.-%, vorzugsweise 0,5 bis 2 Gew.-%, Gleitmittel und/oder 0,1 bis 3 Gew.-%, vorzugsweise 0,5 bis 2 Gew.-%, Antistatika und/oder 0,1 bis 3 Gew.-%, vorzugsweise 0,5 bis 2 Gew.-%, Trennmittel, jeweils bezogen auf das Gewicht der Zwischenschicht, wobei die Menge an Gleitmittel und/oder Antistatika und/oder Trennmittel erfindungsgemäß so gewählt werden muß, daß die Folie insgesamt bis 0,15 Gew.-%, vorzugsweise 0,005 bis 0,3 Gew.-%, insbesondere 0,01 bis 0,1 Gew..%, migrierende Additive wie Gleitmittel und/oder Antistatika und/oder Trennmittel, jeweils bezogen auf das Gesamtgewicht der Folie, enthält.

Gleitmittel sind höhere aliphatische Säureamide, höhere aliphatische Säureester, niedrigmolekulare Wachse und Metallseifen sowie Silikonöle. Besonders geeignet ist der Zusatz von höheren aliphatischen Säureamiden und Silikonölen.

Aliphatische Säureamide sind Amide einer wasserunlöslichen Monocarbonsäure (sogenannte Fettsäuren) mit 8 bis 24 Kohlenstoffatomen, vorzugsweise 10 bis 18 Kohlenstoffatomen. Erucasäureamid, Stearinsäureamid und Ölsäureamid sind bevorzugt.

Geeignete Silikonöle sind Polydialkylsiloxane, vorzugsweise Polydimethylsiloxan, Polymethylphenylsiloxan, olefinmodifiziertes Silikon, mit Polyethern modifiziertes Silikon wie z. B. Polyethylenglykol und Polypropylenglykol sowie epoxyamino-und alkoholmodifiziertes Silikon. Die Viskosität der geeigneten Silikonöle liegt im Bereich von 5 000 bis 1 000 000 mm$^2$/s. Polydimethylsiloxan mit einer Viskosität von 10.000 bis 100.000 mm$^2$/s ist bevorzugt.

Bevorzugte Antistatika sind die im wesentlichen geradkettigen und gesättigten aliphatischen, tertiären Amine mit einem aliphatischen Rest mit 10 bis 20 Kohlenstoffatomen, die mit $\omega$-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Weiterhin sind als Antistatika Monoester aus Glycerin und aliphatischen Fettsäuren geeignet, wobei Fettsäurereste mit 10 bis 20 Kohlenstoffatomen bevorzugt sind. Insbesondere ist Glycerinmonostearat bevorzugt.

In einer bevorzugten Ausführungsform enthält die Zwischenschicht eine Kombination aus Gleitmittel und Antistatika und/oder Trennmittel, wobei eine Kombination aus höheren aliphatischen Säureamiden und tertiären aliphatischen Aminen oder eine Kombination aus Silikonöl und tertiären aliphatischen Aminen oder eine Kombination aus Trennmittel und tertiären aliphatischen Aminen bevorzugt ist. Die Zwischenschicht enthält dann vorzugsweise 0,5 bis 2 Gew.-% Amide und 0,5 bis 2 Gew.-% Amine, jeweils bezogen auf das Gewicht der Zwischenschicht.

Die Zwischenschicht der Folie enthält erfindungsgemäß keine vakuoleniniziierenden Füllstoffe, so daß beim Verstrecken der Folie in der Zwischenschicht im wesentlichen keine Vakuolen erzeugt werden. Es wurde gefunden, daß die Vorteile der Erfindung bei einer vakuolenhaltigen Zwischenschicht beeinträchtigt werden, d. h. daß die migrierenden Additive in einer vakuolenhaltigen Zwischenschicht ihre Wirkung nicht in der vorhergesehenen Weise und nicht in dem gewünschten Maße entfalten. Insbesondere ist die gleichbleibende Antistatik und Reibung nicht mehr gewährleistet. Es ist daher erfindungswesentlich, daß die Zwischenschicht im wesentlichen keine Vakuolen aufweist.

Gegebenenfalls kann die Zwischenschicht jedoch zusätzlich Pigmente, welche im wesentlichen keine Vakuolen erzeugen, und/oder ein Kohlenwasserstoffharz enthalten.

Als Pigmente werden diejenigen Teilchen eingesetzt, welche vorstehend als Pigmente für die Basisschicht beschrieben sind, wobei $TiO_2$ als Pigment für die Zwischenschicht besonders bevorzugt ist. Die Zwischenschicht enthält im allgemeinen 1 bis 20 Gew.-%, vorzugsweise 2 bis 10 Gew.-%, Pigmente, jeweils bezogen auf das Gewicht der Zwischenschicht.

Als Kohlenwasserstoffharze werden diejenigen Harze eingesetzt, welche vorstehend für die Basisschicht beschrieben sind. Die Zwischenschicht enthält im allgemeinen 1 bis 15 Gew.-%, vorzugsweise 1 bis 12 Gew.-%, insbesondere 1 bis 10 Gew.-% Harz, jeweils bezogen auf das Gewicht der Zwischenschicht.

Weiterhin enthalten die Zwischenschichten im allgemeinen zusätzlich die für die Basisschicht beschriebenen Stabilisatoren und Neutralisationsmittel in den entsprechenden auf das Gewicht der Zwischenschicht bezogenen Mengen.

Die Dicke der Zwischenschicht liegt im allgemeinen in einem Bereich von 0,2 bis 5 $\mu$m, vorzugsweise im Bereich von 0,4 bis 3 $\mu$m.

Die erfindungsgemäße Polypropylenfolie umfaßt weiterhin mindestens eine, vorzugsweise beidseitig aufgebrachte Deckschicht/en aus Polymeren aus α-Olefinen mit 2 bis 10 Kohlenstoffatomen.

Beispiele für derartige α-olefinische Polymere sind

ein Propylenhomopolymer oder
ein Copolymer von

Ethylen und Propylen oder
Ethylen und Butylen-1 oder
Propylen und Butylen-1 oder

ein Terpolymer von

Ethylen und Propylen und Butylen-1 oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit
einem oder mehreren der genannten Homo-, Co- und Terpolymeren,
wobei insbesondere Propylenhomopolymer oder
statistische Ethylen-Propylen-Copolymere mit

einem Ethylengehalt von 1 bis 10 Gew.-%, bevorzugt 2,5 bis 8 Gew.-%, oder

statistische Propylen-Butylen-1-Copolymere mit

einem Butylengehalt von 2 bis 25 Gew.-%, bevorzugt 4 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 2 bis 20 Gew.-%, bevorzugt 4 bis 20 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends, bevorzugt sind.

Das in der Deckschicht von nicht siegelfähigen Ausführungsformen der Folie eingesetzte Propylenhomopolymere enthält zum überwiegenden Teil (mindestens 90 %) Propylen und besitzt im allgemeinen einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere hat im allgemeinen einen Schmelzflußindex von 1,5 g/10 min bis 20 g/10 min, vorzugsweise 2,0 g/10 min bis 15 g/10 min.

Die in der Deckschicht von siegelfähigen Ausführungsformen der Folie eingesetzten vorstehend beschriebenen Co- und Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Gegebenenfalls können alle vorstehend beschriebenen Deckschichtpolymeren in der gleichen Weise wie vorstehend für die Basisschicht beschrieben peroxidisch abgebaut sein, wobei grundsätzlich die gleichen Peroxide verwendet werden. Der Abbaufaktor für die Deckschichtpolymeren liegt im allgemeinen in einem Bereich von 3 bis 15, vorzugsweise 6 bis 10.

In einer matten Ausführungsform enthält die Deckschicht zusätzlich ein High Density Polyethylen (HDPE), welches mit den vorstehend beschriebenen Deckschichtpolymeren gemischt oder geblendet wird. Die Zusammensetzung und Einzelheiten der matten Deckschichten sind beispielsweise in der deutschen Patentanmeldung P 43 13 430.0 beschrieben, auf die hier ausdrücklich Bezug genommen wird.

Um den niedrigen erfindungsgemäßen Additivgehalt von maximal 0,15 Gew.-% an migrierenden Additiven zu gewährleisten, werden der Deckschicht vorteilhafterweise im wesentlichen kein Harz, kein höheres aliphatisches Säureamid und kein tertiäres aliphatisches Amin zugesetzt. In einer bevorzugten Ausführungsform enthalten die Deckschichten im wesentlichen auch keine Trennmittel und kein Wachs. Die Deckschichten enthalten jedoch im allgemeinen wie vorstehend für Basis- und Zwischenschicht beschrieben Stabilisatoren und Neutralisationsmittel in den entsprechenden auf das Gewicht der Deckschicht bezogenen Mengen. In einer bevorzugten Ausführungsform enthalten die Deckschichten nachstehend beschriebene Antiblockmittel.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel, vorzugsweise $SiO_2$, liegt im Bereich von 0,1 bis 2 Gew.-%, vorzugsweise 0,1 bis 0,8 Gew.-%. Die mittlere Teilchengröße liegt zwischen 1 und 6 $\mu$m, insbesondere 2 und 5 $\mu$m, wobei Teilchen mit einer kugelförmigen Gestalt, wie in der EP-A-0 236 945 und der DE-A-38 01 535 beschrieben, besonders geeignet sind.

Die Dicke der Deckschicht/en ist im allgemeinen größer als 0,2 $\mu$m und liegt vorzugsweise im Bereich von 0,4 bis 2 $\mu$m, insbesondere 0,5 bis 1,5 $\mu$m.

Die Gesamtdicke der erfindungsgemäßen Polypropylenfolie kann innerhalb weiter Grenzen variieren und richtet sich nach dem beabsichtigten Einsatz. Sie beträgt vorzugsweise 4 bis 150 $\mu$m, insbesondere 5 bis 120 $\mu$m, vorzugsweise 6 bis 100 $\mu$m, wobei die Basisschicht etwa 40 bis 95 % der Gesamtfoliendicke ausmacht.

Die Erfindung betrifft weiterhin ein Verfahren zur Herstellung der erfindungsgemäßen Polypropylenfolie nach dem an sich bekannten Coextrusionsverfahren.

Im Rahmen dieses Verfahrens wird zunächst wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstreckungsverhältnisse liegen im Bereich von 5,0 bis 9, vorzugsweise 5,5 bis 8,5. Die Querstreckverhältnisse liegen im Bereich von 5,0 bis 9,0, vorzugsweise 6,5 bis 9,0.

An die biaxiale Streckung der Folie schließt sich ihre Thermofixierung (Wärmebehandlung) an, wobei die Folie etwa 0,1 bis 20 s lang bei einer Temperatur von 60 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie abgekühlt und verfestigt wird, durch einen Heiz-und Kühlkreislauf bei einer Temperatur von 10 bis 100 °C, vorzugsweise 20 bis 70 °C, zu halten.

Die Temperaturen, bei denen Längs- und Querstreckung durchgeführt werden, können in einem relativ großen Bereich variieren und richten sich nach den gewünschten Eigenschaften der Folie. Im allgemeinen wird die Längsstreckung vorzugsweise bei 80 bis 150 °C und die Querstreckung vorzugsweise bei 120 bis 170 °C durchgeführt.

Bevorzugt wird/werden nach der biaxialen Streckung eine oder beide Oberfläche/n der Folie nach einer der bekannten Methoden corona- oder flammbehandelt. Die Behandlungsintensität liegt im allgemeinen im Bereich von 36 bis 50 mN/m, vorzugsweise 38 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 400 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Mehrschichtfolie zeichnet sich durch ihre hervorragende Eignung als Verpackungs- und Kaschierfolie aus. Es wurde gefunden, daß der mehrschichtige Aufbau in Verbindung mit der speziellen Rezepturierung der einzelnen Schichten die vorteilhafte Wirkung der an sich bekannten Zusatzstoffe gewährleistet, wobei jedoch gleichzeitig deren nachteilige Wirkung vermieden wird.

Überraschenderweise genügt die ausschließliche Rezepturierung der Zwischenschicht mit migrierenden Additiven, um gleichbleibende und gegebenenfalls gute Gleiteigenschaften und gleichbleibende und gegebenenfalls gute antistatische Eigenschaften der Folie zu erzielen. Es wurde gefunden, daß auf diese Weise wesentlich geringere Absolutmengen an migrierenden Additiven erforderlich sind.

Dies bietet erhebliche wirtschaftliche Vorteile, ohne daß Qualitätseinbußen in Kauf genommen werden müssen.

Überraschenderweise müssen weder der Basisschicht noch der Deckschicht zusätzlich die entsprechenden Additive zugesetzt werden, um die gewünschten Folieneigenschaften sicherzustellen.

Es hat sich gezeigt, daß die üblichen Ausdampfungen, wie sie bei Rezepturierung der Deckschichten auftreten, durch den erfindungsgemäßen Folienaufbau vermieden werden. Die Folie zeichnet sich durch einen sehr gleichbleibenden Reibungskoeffizienten sowie niedrige Migrationswerte aus.

Darüber hinaus ist die Folie für eine Coronabehandlung ausgezeichnet geeignet, da zum Zeitpunkt der Coronabehandlung keine störenden Additive in der Deckschicht vorliegen.

Von großer Bedeutung ist die Erfindung bei vakuolenhaltigen Folien. Bei diesem Folientyp können die relativ geringen Additivmengen gemäß der Erfindung trotz der vakuolenhaltigen Basisschicht eine überraschend gute Wirkung entfalten. Herkömmliche vakuolenhaltige Folien, deren Basisschicht mit Additiven versetzt wurde, benötigen gegenüber transparenten Folien erheblich größere Additivmengen, da die Vakuolen eine innere Oberfläche erzeugen, zu der die Additive ebenfalls migrieren. Die Additive können aber ihre Wirkung nur an der äußeren Folienoberfläche entfalten, so daß derjenige Additivanteil, welcher zur inneren Oberfläche wandert, wirkungslos bleibt. Die erzielten Verbesserungen durch die neue Folienstruktur und -rezepturierung sind daher noch ausgeprägter als bei transparenten Folien.

Die Erfindung wird durch die nachfolgenden Beispiele näher erläutert.

**Beispiel 1**

Es wurde durch Coextrusion und durch anschließende stufenweise Orientierung in Längs- und in Querrichtung eine transparente fünfschichtige Folie mit symmetrischem Aufbau mit einer Gesamtdicke von 30 $\mu$m hergestellt. Die Zwischenschichten hatten eine Dicke von jeweils 3 $\mu$m, und die Deckschichten hatten eine Dicke von jeweils 0,5 $\mu$m. Der Gesamtgehalt der Folie an migrierenden Additiven betrug 0,08 Gew.-%, bezogen auf das Gesamtgewicht der Folie.

Basisschicht B:

100 Gew.-%   isotaktisches Polypropylen der Firma Solvay mit dem Markennamen $^{®}$PHP 405

Zwischenschichten Z:

99,6 Gew.-%   isotaktisches Polypropylen der Firma Solvay mit dem Markennamen $^{®}$PHP 405
0,2 Gew.-%   N,N-bis-ethoxyalkylamin
0,2 Gew.-%   Erucasäureamid

Deckschichten D:

99,7 Gew.-%   statistisches Ethylen-Propylen-Copolymeres mit einem $C_2$-Gehalt von 4,5 Gew.-%
0,3 Gew.-%   $SiO_2$ als Antiblockmittel mit einer mittleren Teilchengröße von 3 $\mu$m

Die Herstellungsbedingungen in den einzelnen Verfahrensschritten waren:

| Extrusion: | Temperaturen: | A-Schicht | 290 °C |
|---|---|---|---|
| | | B-Schichten | 280 °C |
| | | C-Schichten | 280 °C |
| | Temperatur der Abzugswalze | | 30 °C |

(fortgesetzt)

| Längsstreckung: | Temperatur | | 130 °C |
|---|---|---|---|
| | Längsstreckverhältnis | | 5,0 |
| Querstreckung: | Temperatur | | 160 °C |
| | Querstreckverhältnis | | 10,0 |
| Fixierung: | Temperatur | | 110 °C |
| | Konvergenz | | 20 % |

Die Folie wies bei der Herstellung Vorteile auf und zeichnete sich durch herausragende Eigenschaften aus:

- kein Ausdampfen der Additive in den Streckaggregaten
- keine Ablagerungen auf Walzen
- geringe Kosten für die Additive

**Beispiel 2**

Wie in Beispiel 1 wurde eine fünfschichtige weiße Folie mit einer Gesamtdicke von 30 µm, mit Zwischenschichtdicken von jeweils 3 µm und mit Deckschichtdicken von jeweils 0,5 µm hergestellt. Der Gesamtgehalt der Folie an migrierenden Additiven betrug 0,08 Gew.-%, bezogen auf das Gesamtgewicht der Folie. Die Rohstoffzusammensetzung für die Basisschicht, die Zwischenschichten und für die Deckschichten war jetzt wie folgt:

Basisschicht B:

96 Gew.-%     isotaktisches Polypropylen der Firma Solvay mit dem Markennamen $^{®}$PHP 405
4 Gew.-%     Calciumcarbonat mit einer mittleren Teilchengröße von 1,5 µm

Zwischenschichten Z:

94,6 Gew.-%     isotaktisches Polypropylen der Firma Solvay mit dem Markennamen $^{®}$PHP 405
5,0 Gew.-%     Titandioxid vom Rutil-Typ mit einer mittleren Teilchengröße von 0,25 µm
0,2 Gew.-%     N,N-bis-ethoxyalkylamin
0,2 Gew.-%     Erucasäureamid

Deckschichten D:

99,7 Gew.-%     statistisches Ethylen-Propylen-Copolymeres mit einem $C_2$-Gehalt von 4,5 Gew.-%
0,3 Gew.-%     SiO$_2$ als Antiblockmittel mit einer mittleren Teilchengröße von 3 µm

Geändert wurden lediglich die Bedingungen in der Längs- und in der Querstreckung:

| Längsstreckung: | Temperatur | 290 °C |
|---|---|---|
| | Längsstreckverhältnis | 5,5 |
| Querstreckung: | Temperatur | 155 °C |
| | Querstreckverhältnis | 9,5 |

**Beispiel 3**

Im Unterschied zu Beispiel 2 enthielt die Folie jetzt in den Zwischenschichten zusätzlich ein niedrigmolekulares Kohlenwasserstoffharz der Firma Exxon. Der Name des Harzes ist $^{®}$ECR 356 und wurde in Form eines 50 Gew.-%igen Masterbatches zur Verfügung gestellt. Der gewichtsmäßige Anteil des Kohlenwasserstoffharzes an den Zwischenschichten betrug ca. 20 %. Die Streckbedingungen waren identisch zu denjenigen in Beispiel 2. Die Folie zeichnete sich durch eine verbesserte Steifigkeit aus.

Zur Charakterisierung der Rohstoffe und der Folien wurden die folgenden Meßmethoden benutzt:

Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

Reißfestigkeit, Reißdehnung

Die Reißfestigkeit und die Reißdehnung werden nach DIN 53455 bestimmt.

Bestimmung des Warmblockverhaltens

Zur Messung des Warmblockverhaltens werden zwei einseitig filzbeklebte Holzklötzchen mit den Abmessungen 72 mm x 41 mm x 13 mm in die zu vermessende Folie eingeschlagen und gesiegelt. Auf die mit den Filzauflagen zueinandergekehrten Holzklötzchen wird ein Gewicht von 200 g plaziert und dieser Aufbau in einen auf 70 °C vortemperierten Wärmeofen gebracht und dort über 2 h belassen. Danach wird für 30 min auf Raumtemperatur (21 °C) abgekühlt, das Gewicht von den Holzklötzchen heruntergenommen und das obere Klötzchen mittels einer mechanischen Apparatur vom unteren Klötzchen heruntergezogen. Die Auswertung erfolgt über 4 Einzelmessungen, über die dann eine maximale Abschubkraft (gemessen in N) festgestellt wird. Die Spezifikation ist erfüllt, wenn keine der Einzelmessungen über 5 N liegt.

Schmelzflußindex

Der Schmelzflußindex wurde nach DIN 53 735 bei 21,6 N Belastung und 230 °C gemessen.

Reibungskoeffizient

Der Reibungskoeffizient der Folie wurde nach DIN 53 375 gemessen.

Schmelzpunkt

DSC-Messung, Maximum der Schmelzkurve, Aufheizgeschwindigkeit 20 °C/min.

Trübung

Die Trübung der Folie wurde nach ASTM-D 1003-52 gemessen.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Oberflächenspannung

Die Oberflächenspannung wurde mittels der sogenannten Tintenmethode (DIN 53 364) bestimmt.

**Patentansprüche**

1. Biaxial orientierte polyolefinische Mehrschichtfolie, welche mindestens eine Basisschicht B, eine Zwischenschicht Z und eine Deckschicht D umfaßt und welche migrierende Additive enthält, dadurch gekennzeichnet, daß die Folie die migrierenden Additive ausschließlich in ihrer Zwischenschicht und in einer Menge von maximal 0,15 Gew.-% bezogen auf das Gesamtgewicht der Folie, enthält.

2. Polyolefinische Mehrschichtfolie gemäß Anspruch 1, dadurch gekennzeichnet, daß sie 0,005 bis 0,15 Gew.-% Gleitmittel oder 0,005 bis 0,15 Gew.-% Antistatika oder 0,005 bis 0,15 Gew.-% Gleitmittel und Antistatika, jeweils bezogen auf das Gesamtgewicht der Folie, enthält und der Reibungskoeffizient der Folie, gemessen nach DIN 53 375, <0,4 beträgt.

3. Polyolefinische Mehrschichtfolie gemäß Anspruch 1 und/oder 2, dadurch gekennzeichnet, daß die Folie aus einer Basisschicht B und ein- oder beidseitig darauf aufgebrachten Zwischenschichten Z und auf der Basisschicht B und der Zwischenschicht Z oder den Zwischenschichten Z aufgebrachten Deckschichten D besteht.

4. Polyolefinische Mehrschichtfolie gemäß einem oder mehreren der Ansprüche 1 bis 3, dadurch gekennzeichnet, daß die Deckschicht/en Antiblockmittel, vorzugsweise $SiO_2$, enthalten.

5. Polyolefinische Mehrschichtfolie gemäß einem oder mehreren der Ansprüche 1 bis 4, dadurch gekennzeichnet, daß die Basisschicht im wesentlichen ein Propylenhomopolymer enthält, dessen MFI 1,5 bis 20 g/10 min und dessen Schmelzpunkt 140 bis 165 °C beträgt.

6. Polyolefinische Mehrschichtfolie gemäß einem oder mehreren der Ansprüche 1 bis 5, dadurch gekennzeichnet, daß das Propylenpolymere der Basisschicht peroxidisch abgebaut ist.

7. Polyolefinische Mehrschichtfolie gemäß einem oder mehreren der Ansprüche 1 bis 6, dadurch gekennzeichnet, daß die Basisschicht vakuoleniniziierende Teilchen und/oder Pigment enthält.

8. Polyolefinische Mehrschichtfolie gemäß einem oder mehreren der Ansprüche 1 bis 7, dadurch gekennzeichnet, daß die Basisschicht ein Kohlenwasserstoffharz enthält.

9. Polyolefinische Mehrschichtfolie gemäß einem oder mehreren der Ansprüche 1 bis 8, dadurch gekennzeichnet, daß die Zwischenschicht ein Propylenhomopolymer und/oder ein Propylencopolymer und/oder ein Propylenterpolymer enthält.

10. Polyolefinische Mehrschichtfolie gemäß einem oder mehreren der Ansprüche 1 bis 9, dadurch gekennzeichnet, daß das Propylenpolymere der Zwischenschicht peroxidisch abgebaut ist.

11. Polyolefinische Mehrschichtfolie gemäß einem oder mehreren der Ansprüche 1 bis 10, dadurch gekennzeichnet, daß die Zwischenschicht Kohlenwasserstoffharz und/oder Pigmente enthält.

12. Polyolefinische Mehrschichtfolie gemäß einem oder mehreren der Ansprüche 1 bis 11, dadurch gekennzeichnet, daß die Deckschicht/en ein Propylenhomopolymer und/oder Propylencopolymer und/oder Propylenterpolymer enthält.

13. Verfahren zur Herstellung der polyolefinischen Mehrschichtfolie gemäß Anspruch 1, bei dem die den einzelnen Schichten der Folie entsprechenden Schmelzen durch eine Flachdüse coextrudiert werden, die coextrudierte Folie über eine Abzugswalze, deren Temperatur zwischen 10 und 100 °C liegt, abgezogen wird, die Folie biaxial gestreckt wird mit einem Längsstreckverhältnis von 5:1 bis 9:1 und einem Querstreckverhältnis von 5:1 bis 9:1, die biaxial gestreckte Folie thermofixiert, gegebenenfalls coronabehandelt und anschließend aufgewickelt wird.

14. Verwendung einer polyolefinische Mehrschichtfolie gemäß einem oder mehreren der Ansprüche 1 bis 12 als Verpackungsfolie oder als Kaschierfolie.

**Claims**

1. A biaxially oriented, multilayer polyolefinic film comprising at least one base layer B, one interlayer Z and one top layer D and containing migrating additives, wherein the film contains the migrating additives exclusively in its interlayer and in a maximum amount of 0.15% by weight, based on the total weight of the film.

2. A multilayer polyolefinic film as claimed in claim 1, which contains from 0.005 to 0.15% by weight of lubricants or from 0.005 to 0.15% by weight of antistatics or from 0.005 to 0.15% by weight of lubricants and antistatics, in each case based on the total weight of the film, and the coefficient of friction of the film, measured in accordance with DIN 53 375, is < 0.4.

3. A multilayer polyolefinic film as claimed in claim 1 and/or 2, wherein the film comprises a base layer B and interlayers Z applied thereto on one or both sides, and top layers D applied to the base layer B and the interlayer Z or the interlayers Z.

4. A multilayer polyolefinic film as claimed in one or more of claims 1 to 3, wherein the top layer(s) contain(s) antiblocking agents, preferably $SiO_2$.

5. A multilayer polyolefinic film as claimed in one or more of claims 1 to 4, wherein the base layer essentially consists of a propylene homopolymer whose MFI is from 1.5 to 20 g/10 min and whose melting point is from 140 to 165°C.

6. A multilayer polyolefinic film as claimed in one or more of claims 1 to 5, wherein the propylene polymer of the base layer has been peroxidically degraded.

7. A multilayer polyolefinic film as claimed in one or more of claims 1 to 6, wherein the base layer contains vacuole-inducing particles and/or pigment.

8. A multilayer polyolefinic film as claimed in one or more of claims 1 to 7, wherein the base layer contains a hydrocarbon resin.

9. A multilayer polyolefinic film as claimed in one or more of claims 1 to 8, wherein the interlayer comprises a propylene homopolymer and/or a propylene copolymer and/or a propylene terpolymer.

10. A multilayer polyolefinic film as claimed in one or more of claims 1 to 9, wherein the propylene polymer of the interlayer has been peroxidically degraded.

11. A multilayer polyolefinic film as claimed in one or more of claims 1 to 10, wherein the interlayer contains hydrocarbon resin and/or pigments.

12. A multilayer polyolefinic film as claimed in one or more of claims 1 to 11, wherein the top layer(s) comprise(s) a propylene homopolymer and/or propylene copolymer and/or propylene terpolymer.

13. A process for the production of a multilayer polyolefinic film as claimed in claim 1, in which the melts corresponding to the individual layers of the film are coextruded through a flat-film die, the coextruded film is taken off over a take-off roll whose temperature is between 10 and 100°C, the film is biaxially stretched at a longitudinal stretching ratio of from 5:1 to 9:1 and a transverse stretching ratio of from 5:1 to 9:1, and the biaxially stretched film is heat-set, if desired corona-treated and subsequently wound up.

14. The use of a multilayer polyolefinic film as claimed in one or more of claims 1 to 12 as a packaging film or as a lamination film.

**Revendications**

1. Feuille multicouche polyoléfinique à orientation biaxiale, qui comporte au moins une couche de base B, une couche intermédiaire Z et une couche de couverture D, et qui contient des additifs migrants, caractérisée en ce que la feuille contient les additifs migrants exclusivement dans sa couche intermédiaire, et en une quantité au plus égale à 0,15 % en poids par rapport au poids total de la feuille.

2. Feuille multicouche polyoléfinique selon la revendication 1, caractérisée en ce qu'elle contient de 0,005 à 0,15 % en poids d'un lubrifiant, ou de 0,005 à 0,15 % en poids d'un agent antistatique, ou de 0,005 à 0,15 % en poids d'un lubrifiant et d'un agent antistatique, dans tous les cas par rapport au poids total de la feuille, le coefficient de frottement de la feuille, mesuré selon DIN 53 375, étant < 0,4.

3. Feuille multicouche polyoléfinique selon la revendication 1 et/ou 2, caractérisée en ce que la feuille est constituée d'une couche de base B et de couches intermédiaires Z appliquées sur une ou les deux faces sur cette dernière, et de couches de couverture appliquées sur la couche de base B et la couche intermédiaire Z ou les couches intermédiaires Z.

4.  Feuille multicouche polyoléfinique selon l'une ou plusieurs des revendications 1 à 3, caractérisée en ce que la ou les couches de couverture contiennent un agent antiadhérence de contact, de préférence du $SiO_2$.

5.  Feuille multicouche polyoléfinique selon l'une ou plusieurs des revendications 1 à 4, caractérisée en ce que la couche de base contient pour l'essentiel un homopolymère du propylène dont l'indice de fluidité MFI est de 1,5 à 20 g/10 min et dont le point de fusion est de 140 à 165°C.

6.  Feuille multicouche polyoléfinique selon l'une ou plusieurs des revendications 1 à 5, caractérisée en ce que le polymère du propylène de la couche de base a subi une dégradation par un peroxyde.

7.  Feuille multicouche polyoléfinique selon l'une ou plusieurs des revendications 1 à 6, caractérisée en ce que la couche de base contient des particules créant des vacuoles et/ou un pigment.

8.  Feuille multicouche polyoléfinique selon l'une ou plusieurs des revendications 1 à 7, caractérisée en ce que la couche de base contient une résine hydrocarbonée.

9.  Feuille multicouche polyoléfinique selon l'une ou plusieurs des revendications 1 à 8, caractérisée en ce que la couche intermédiaire contient un homopolymère du propylène et/ou un copolymère du propylène et/ou un terpolymère du propylène.

10. Feuille multicouche polyoléfinique selon l'une ou plusieurs des revendications 1 à 9, caractérisée en ce que le polymère du propylène de la couche intermédiaire a subi une dégradation par un peroxyde.

11. Feuille multicouche polyoléfinique selon l'une ou plusieurs des revendications 1 à 10, caractérisée en ce que la couche intermédiaire contient une résine hydrocarbonée et/ou des pigments.

12. Feuille multicouche polyoléfinique selon l'une ou plusieurs des revendications 1 à 11, caractérisée en ce que la ou les couches de couverture contiennent un homopolymère du propylène et/ou un copolymère du propylène et/ou un terpolymère du propylène.

13. Procédé de fabrication de la feuille multicouche polyoléfinique selon la revendication 1, dans lequel les matières fondues correspondant aux différentes couches de la feuille sont coextrudées à travers une filière plate, la feuille coextrudée est tirée sur un cylindre de tirage dont la température est comprise entre 10 et 100°C, la feuille subit un étirage biaxial avec un taux d'étirage longitudinal de 5:1 à 9:1 et un taux d'étirage transversal de 5:1 à 9:1, la feuille ayant subi un étirage biaxial est thermofixée, éventuellement soumise à un traitement corona, puis enroulée.

14. Utilisation d'une feuille multicouche polyoléfinique selon l'une ou plusieurs des revendications 1 à 12 en tant que feuille d'emballage ou feuille de plaquage.